# EUROPÄISCHE PATENTANMELDUNG

(11) **EP 3 441 193 A1**
(43) Veröffentlichungstag der Anmeldung: **13.02.2019**
(21) Anmeldenummer: 17185222.1
(22) Anmeldetag: 08.08.2017
(51) Int. Cl.: B25F 5/02

(54) **AKKUEINHEIT MIT VERRIEGELUNGSMECHANISMUS**

(71) Anmelder: HILTI Aktiengesellschaft, 9494 Schaan (LI)
(72) Erfinder: Holubarsch, Markus, 86899 Kaufering (DE); Meixner, Ralf, 87656 Germaringen (DE); Königer, Tobias, 6900 Bregenz (AT)
(74) Vertreter: Hilti Aktiengesellschaft Corporate Intellectual Property

(57) **Zusammenfassung**

Akkueinheit (100), die zur Aufnahme in einer Aufnahmebucht (90) einer elektrischen Handwerkzeugmaschine (200) ausgebildet ist, wobei die Akkueinheit (100) einen Verriegelungsmechanismus (10) aufweist, der in einem Verriegelungszustand (VZ) ein Herausziehen der Akkueinheit (100) aus der Aufnahmebucht (90) verhindert, wobei der Verriegelungsmechanismus (10) über eine Entriegelungstaste (11) mit einer Druckfläche (13) verfügt, durch Drücken und Auslenken welcher der Verriegelungsmechanismus (10) in einen Freigabezustand (FZ) verbracht werden kann, bei dem die Akkueinheit (100) aus der Aufnahmebucht (90) in Auszugsrichtung (AR) herausziehbar ist, wobei die Druckfläche (13), im Freigabezustand (FZ) und bezogen auf die Auszugsrichtung (AR), eine erste schiefe Ebene (E1) derart definiert, dass ein Vektoranteil (FA) einer auf die Druckfläche (13) einwirkendenden Betätigungskraft (FB) in Auszugsrichtung (AR) orientiert ist.

## Beschreibung

Die vorliegende Erfindung betrifft eine Akkueinheit, die zur Aufnahme in einer Aufnahmebucht einer elektrischen Handwerkzeugmaschine ausgebildet ist. Die Akkueinheit weist einen Verriegelungsmechanismus auf, der in einem Verriegelungszustand ein Herausziehen der Akkueinheit aus der Aufnahmebucht verhindert. Der Verriegelungsmechanismus verfügt über eine Entriegelungstaste mit einer Druckfläche, durch Drücken und Auslenken welcher der Verriegelungsmechanismus in einen Freigabezustand verbracht werden kann. Im Freigabezustand ist die Akkueinheit aus der Aufnahmebucht in Auszugsrichtung herausziehbar.

Akkueinheiten der eingangs genannten Art sind grundsätzlich aus dem Stand der Technik bekannt.

Es ist Aufgabe der vorliegenden Erfindung, eine Akkueinheit bereitzustellen, die sich leicht bzw. ergonomisch aus einer Aufnahmebucht einer elektrischen Handwerkzeugmaschine entnehmen lässt.

Die Erfindung wird dadurch gelöst, dass die Druckfläche, im Freigabezustand und bezogen auf die Auszugsrichtung, eine erste schiefe Ebene derart definiert, dass ein Vektoranteil einer auf die Druckfläche einwirkenden Betätigungskraft in Auszugsrichtung orientiert ist.

Die Erfindung schließt die Erkenntnis ein, dass Akkueinheiten des Standes der Technik mechanisch entriegelt werden müssen, um diese aus einer Aufnahmebucht einer Handwerkzeugmaschine entnehmen zu können. Dieses mechanische Entriegeln erfolgt typischerweise durch Drücken wenigstens einer Entriegelungstaste bzw. Entriegelungshakens. Ist die Akkueinheit entriegelt, d.h. der Verriegelungsmechanismus im Freigabezustand, kann die Akkueinheit durch Ziehen oder Drücken in Auszugsrichtung aus der Aufnahmebucht entnommen werden. Es wurde in diesem Zusammenhang erkannt, dass der dafür erforderliche Kraftaufwand abhängig vom Verschleiß, der Verschmutzung, usw. der Akkueinheit bzw. der Akkuschienen, über die die Akkueinheit in der Aufnahmebucht gehalten werden kann, variiert.

Bei Akkueinheiten des Standes der Technik wird das Entnehmen der Akkueinheit, aus ergonomischer Sicht, dadurch erschwert, dass die Betätigungskraft zur Betätigung des Entriegelungsmechanismus quer oder sogar entgegen der Auszugsrichtung orientiert aufgebracht werden muss. Mit anderen Worten wurde als problematisch bei Akkueinheiten des Standes der Technik erkannt, dass, wenn beispielsweise in einer Richtung mit dem Daumen auf den Verriegelungsmechanismus gedrückt wird, der Akku selbst dann aber in entgegengesetzter Richtung aus der Aufnahmebucht herausgezogen werden muss. Gleichzeitiges Drücken auf die Entriegelungstaste in die eine Richtung und das Herausziehen der Akkueinheit in die andere Richtung (Auszugsrichtung) ist aus ergonomischer Sicht problematisch.

Diese Nachteile werden durch die erfindungsgemäße Akkueinheit vermieden oder zumindest reduziert. Dadurch, dass ein Vektoranteil einer auf die Druckfläche einwirkenden Betätigungskraft in Auszugsrichtung orientiert ist, wird das Entnehmen der Akkueinheit deutlich erleichtert.

In einer bevorzugten Ausgestaltung ist vorgesehen, dass die Druckfläche, im Verriegelungszustand und bezogen auf die Auszugsrichtung, eine zweite schiefe Ebene derart definiert, dass der Vektoranteil der auf die Druckfläche einwirkenden Betätigungskraft entgegen der Auszugsrichtung orientiert ist.

Es hat sich als vorteilhaft herausgestellt, wenn der Verriegelungsmechanismus um eine senkrecht zur Auszugsrichtung verlaufende Drehachse drehbar an der Akkueinheit gelagert ist. Der Verriegelungsmechanismus kann über ein Drehgelenk drehbar an der Akkueinheit gelagert sein. Alternativ kann der Verriegelungsmechanismus über einen nachgiebigen Mechanismus drehbar an der Akkueinheit gelagert sein.

Vorzugsweise ist an einer Oberfläche der Akkueinheit eine Ausnehmung ausgebildet, in die der Verriegelungsmechanismus im Zuge seiner Betätigung in Richtung des Freigabezustands einschwenken kann. Durch vergleichsweise tiefes Einschwenken des Verriegelungsmechanismus bzw. der Entriegelungstaste mit deren Druckfläche kann ein in Auszugsrichtung orientierter Vektoranteil der auf die Druckfläche einwirkenden Betätigungskraft vorteilhafterweise vergrößert werden.

Es hat sich als vorteilhaft herausgestellt, dass im Freigabezustand ein Nebenwinkel, der zwischen erster schiefer Ebene und Auszugsrichtung eingeschlossen und um die Drehachse definiert ist, zwischen 5 Grad und 10 Grad beträgt. Der Nebenwinkel kann zwischen 5 und 20 Grad betragen.

In einer weiteren bevorzugten Ausgestaltung weist der Verriegelungsmechanismus einen Rasthaken auf, der im Verriegelungszustand mit einer an der Aufnahmebucht ausgebildeten korrespondierenden Rastausnehmung im Eingriff ist. Vorzugsweise ist genau ein Rasthaken vorgesehen.

Es hat sich als vorteilhaft herausgestellt, wenn die Auszugsrichtung parallel zur Rotationsachse einer Werkzeugspindel der Werkzeugmaschine verläuft.

Vorzugsweise ist der Verriegelungsmechanismus zusätzlich zu einer an der Akkueinheit vorgesehenen Akkuschiene, die dem Halten der Akkueinheit an der Handwerkzeugmaschine dient, vorgesehen.

In einer weiteren bevorzugten Ausgestaltung ist der Verriegelungsmechanismus ausschließlich auf einer der Handwerkzeugmaschine betriebsgemäß zugewandten Seite der Akkueinheit angeordnet ist.

Es hat sich als vorteilhaft herausgestellt, wenn die Betätigungskraft überwiegend senkrecht zur Auszugsrichtung und parallel zu einem Handgriff der Handwerkzeugmaschine aufzubringen ist.

Die Erfindung wird ebenfalls gelöst durch eine elektrische Handwerkzeugmaschine mit einer vorbeschriebenen Akkueinheit.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein bevorzugtes Ausführungsbeispiel einer erfindungsgemäßen Akkueinheit, die an einer elektrischen Handwerkzeugmaschine angeordnet ist;
- Fig. 2: ein bevorzugtes Ausführungsbeispiel eines erfindungsgemäßen Verriegelungsmechanismus im Freigabezustand und im Verriegelungszustand;
- Fig. 3: den Verriegelungsmechanismus der Fig. 2 im Freigabezustand; und
- Fig. 4: eine perspektivische Ansicht eines bevorzugten Ausführungsbeispiels einer erfindungsgemäßen Akkueinheit.

### Ausführungsbeispiele:

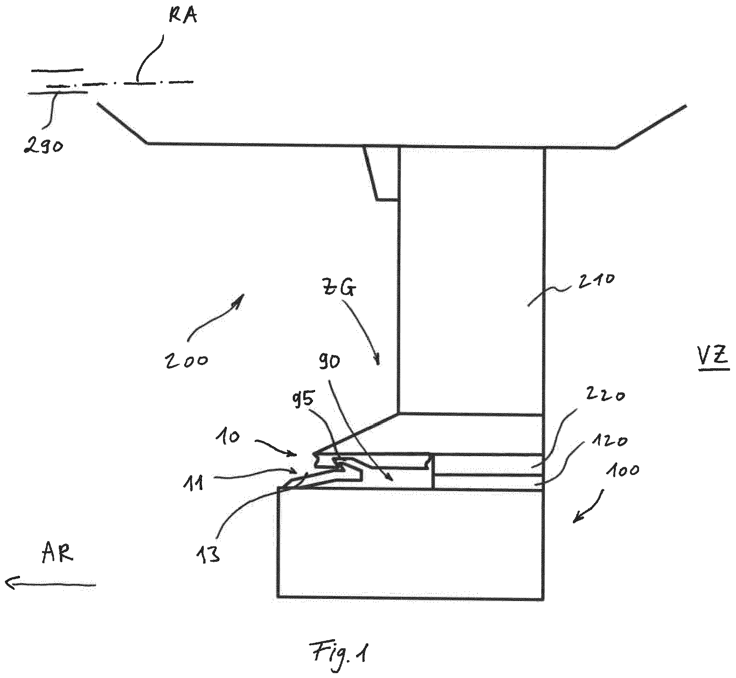

Eine Akkueinheit 100 und eine elektrische Handwerkzeugmaschine 200 sind in Fig. 1 dargestellt. Die Akkueinheit 100 ist zur Aufnahme in einer Aufnahmebucht 90 der Handwerkzeugmaschine 200 ausgebildet. Dazu weist die Akkueinheit 100 eine Akkuschiene 120 auf, die in formschlüssigem Eingriff mit einer an der Handwerkzeugmaschine 200 ausgebildeten Geräteschiene 220 steht. Die Akkuschiene 120 und die Geräteschiene 220 verhindern ein Herausfallen der Akkueinheit 100 aus der Aufnahmebucht 90 (in Fig. 1 in senkrechter Richtung nach unten).

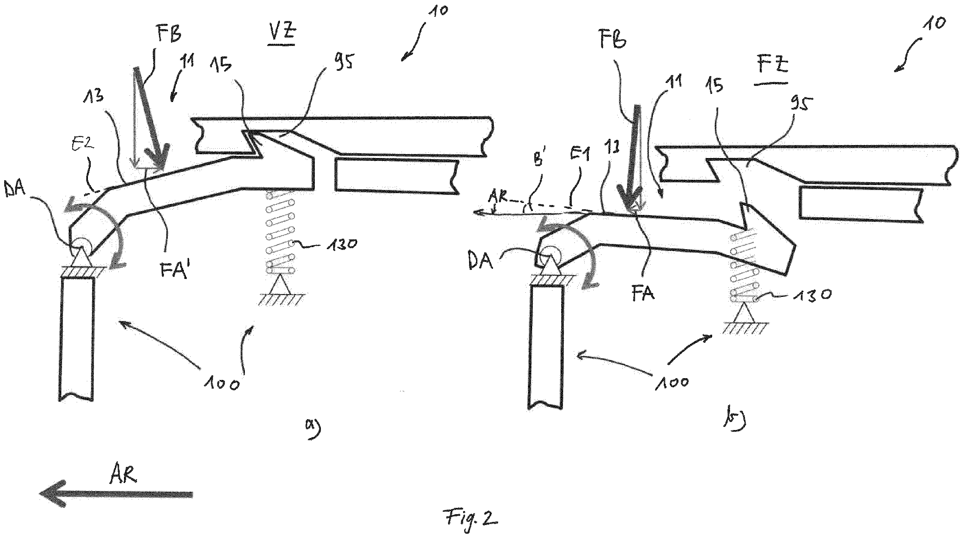

Die Akkueinheit 100 weist weiterhin einen Verriegelungsmechanismus 10 auf, der im hier gezeigten Verriegelungszustand VZ ein Herausziehen der Akkueinheit 100 in Auszugsrichtung AR verhindert. Der Verriegelungsmechanismus 10 verfügt über eine Entriegelungstaste 11 mit einer Druckfläche 13. Durch Drücken der Druckfläche 13 und dementsprechendes Auslenken der Entriegelungstaste 11 kann der Verriegelungsmechanismus 10 in einen Freigabezustand (vgl. Fig. 2B) verbracht werden, bei dem die Akkueinheit 100 aus der Aufnahmebucht 90 in Auszugsrichtung AR herausziehbar ist.

Wie der Fig. 1 ebenfalls entnommen werden kann, läuft die Auszugsrichtung AR parallel zur Rotationsachse RA einer Werkzeugspindel 290 der Handwerkzeugmaschine 200. Weiterhin ist der Verriegelungsmechanismus 10 ausschließlich auf einer der Handwerkzeugmaschine 200 betriebsgemäß zugewandten Seite ZG der Akkueinheit 100 angeordnet. Unter betriebsgemäß ist hier zu verstehen, dass die Akkueinheit 100 in der Aufnahmebucht 90 angeordnet ist, um die elektrische Handwerkzeugmaschine 200 mit Strom zu versorgen.

Wie ebenfalls der Fig. 1 entnommen werden kann, weist der Verriegelungsmechanismus 10 einen Rasthaken 15 auf, der im gezeigten Verriegelungszustand VZ mit einer an der Aufnahmebucht 90 ausgebildeten korrespondierenden Rastausnehmung 95 im Eingriff ist. Durch den Eingriff von Rasthaken 15 in der Rastausnehmung 95 wird ein Herausziehen der Akkueinheit 100 aus der Aufnahmebucht 90 verhindert.

Der eigentliche erfindungsgemäße Verriegelungsmechanismus wird nun mit Bezug auf Fig. 2 beschrieben.

Dazu zeigt Fig. 2A zunächst den Verriegelungszustand VZ, in dem der Rasthaken 15 in der korrespondierenden Rastausnehmung 95 eingehakt ist und somit ein Herausziehen der Akkueinheit 100 in Auszugsrichtung AR verhindert wird. Fig. 2B zeigt hingegen den Freigabezustand FZ, in dem der Rasthaken 15 nicht im Eingriff mit der Rastausnehmung 95 befindlich ist und dementsprechend die Akkueinheit 100 aus der hier nicht genauer dargestellten Aufnahmebucht 90 in Auszugsrichtung AR herausziehbar ist.

Erfindungsgemäß ist vorgesehen (siehe Fig. 2B), dass die Druckfläche 13 im Freigabezustand FZ und bezogen auf die Auszugsrichtung AR eine erste schiefe Ebene E1 derart definiert, dass ein Vektoranteil FA eine auf die Druckfläche 13 einwirkenden Betätigungskraft FB in Auszugsrichtung AR orientiert ist.

Um den Entriegelungsmechanismus 10 also in den in Fig. 2B gezeigten Freigabezustand FZ zu verbringen, muss der Benutzer beispielsweise mittels des Daumens eine Betätigungskraft FB auf die Druckfläche 13 aufbringen. Durch die in Fig. 2B gezeigte Neigung der Druckfläche 13 zur Auszugsrichtung AR (Horizontale) wirkt ein Vektoranteil FA der Betätigungskraft FB in Auszugsrichtung. Mit anderen Worten begünstigt die ohnehin zum Entriegeln des Verriegelungsmechanismus 10 erforderliche Betätigungskraft FB gleichzeitig ein Herausziehen der Akkueinheit 100 in Auszugsrichtung AR. Der Betrag des Vektoranteils FA bestimmt sich hierbei durch den Cosinus des zwischen Auszugsrichtung AR und erster schiefer Ebene E1 eingeschlossenen Winkels B mal der auf die Druckfläche 13 einwirkenden Betätigungskraft FB.

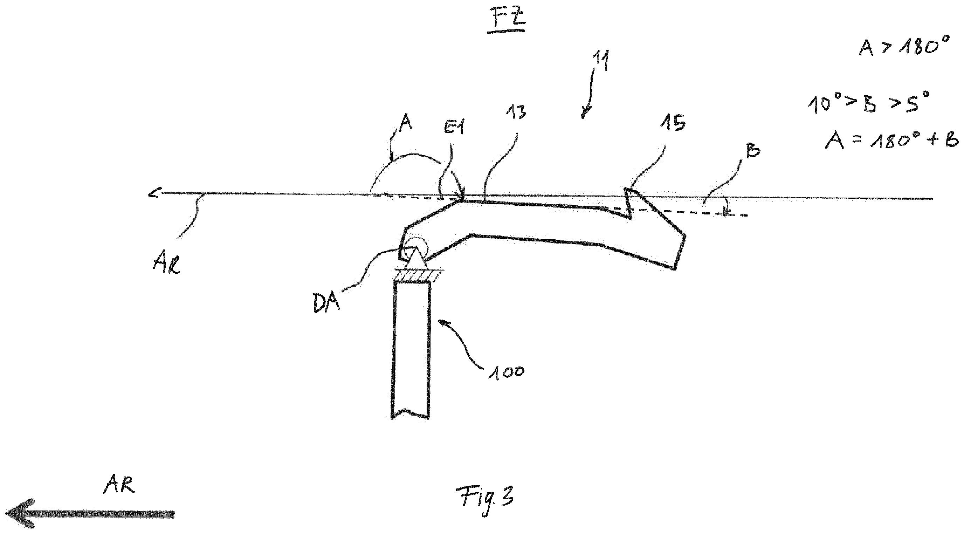

Dies wird später mit Bezug auf Fig. 3 weiter erläutert.

Wie ebenfalls der Fig. 2B entnommen werden kann, ist die Betätigungskraft FB gegen eine Druckfeder 130 aufzubringen.

Fig. 2A zeigt nunmehr den Verriegelungszustand VZ. Der Verriegelungsmechanismus 10 ist derart eingerichtet, dass die Druckfläche 13, im Verriegelungszustand VZ und bezogen auf die Auszugsrichtung AR eine zweite schiefe Ebene E2 derart definiert, dass der Vektoranteil FA' der auf die Druckfläche 13 einwirkenden Betätigungskraft FB entgegen der Auszugsrichtung AR orientiert ist. Dadurch, dass der Vektoranteil FA' entgegen der Auszugsrichtung AR orientiert ist, wird beim Aufbringen der Betätigungskraft FB zunächst ein Ausrasten des Rasthakens 15 aus der korrespondierenden Rastausnehmung 95 begünstigt. Durch weiteres Drücken auf die Druckfläche 13 wird die Entriegelungstaste 11 in den in Fig. 2B gezeigten Zustand verbracht, in dem wie bereits beschrieben der Vektoranteil FA in Auszugsrichtung AR orientiert ist.

Der Verriegelungsmechanismus 10 ist um eine senkrecht zur Auszugsrichtung AR verlaufende Drehachse DA drehbar an der Akkueinheit 100 gelagert. In der Fig. 2 weist die Drehachse DA in die Bildebene hinein.

Aus der Zusammenschau der Figuren 1 und 2 wird deutlich, dass die Betätigungskraft FB überwiegend senkrecht zur Auszugsrichtung AR und parallel zu dem Handgriff 210 der Handwerkzeugmaschine 200 (vgl. Fig. 1) aufzubringen ist.

Mit anderen Worten beträgt der Betrag des Vektoranteils FA weniger als die Hälfte, vorzugsweise weniger als ein Drittel des Betrags der Betätigungskraft FB.

Mit Bezug auf Fig. 3 sollen nunmehr die Winkelverhältnisse der erfindungsgemäß vorgesehenen ersten schiefen Ebene E1 genauer beschrieben werden.

Zum Zwecke der Beschreibung stimmt in Fig. 3 die Auszugsrichtung AR mit der Horizontalen überein. Ausgehend von der Auszugsrichtung AR ist im Uhrzeigersinn um Drehachse DA ein Hauptwinkel A definiert, der im hier gezeigten Freigabezustand FZ größer als 180° ist. Zwischen Auszugsrichtung AR und erster schiefer Ebene E1 ist im Uhrzeigersinn um die Drehachse DA ein Nebenwinkel B definiert.

Vorzugsweise ist im Freigabezustand FZ ein Nebenwinkel B zwischen 5° und 10° vorgesehen. Zum Erzeugen eines in Auszugsrichtung AR orientierten Vektoranteils FA ist es jedenfalls erforderlich, dass der Nebenwinkel B größer 0° ist. Der Betrag des in Auszugsrichtung AR orientierten Vektoranteils FA wächst mit steigendem Nebenwinkel B. Der in Fig. 3 dargestellte Nebenwinkel B entspricht dem in Fig. 2B dargestellten Winkel B'.

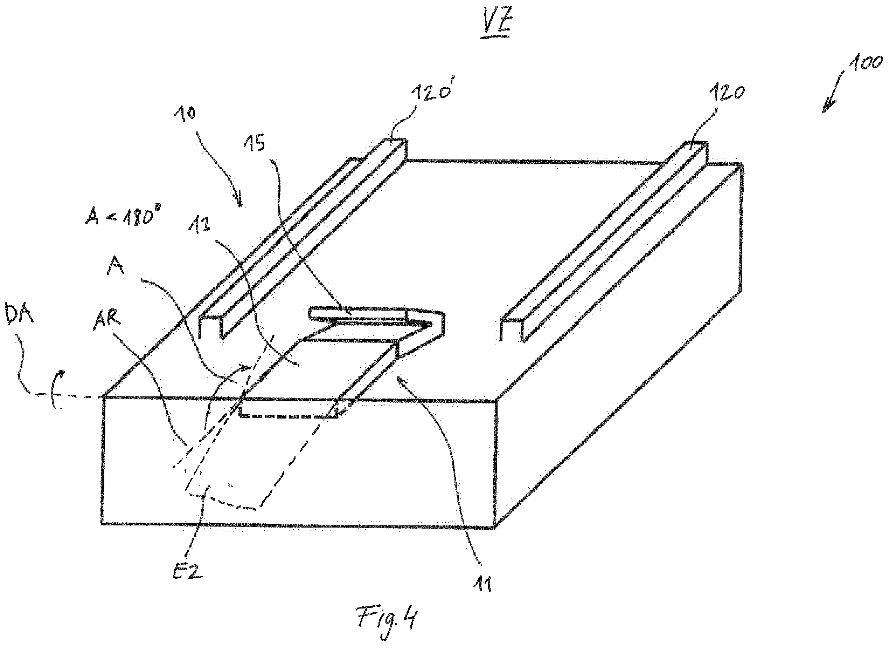

Fig. 4 zeigt schließlich eine perspektivische Darstellung der erfindungsgemäßen Akkueinheit 100. Gut zu erkennen sind die beidseitig an der Akkueinheit 100 angeordneten Akkuschienen 120, 120', die mit korrespondierenden Geräteschienen 220 (vgl. Fig. 1) zum Halten der Akkueinheit 100 in der Aufnahmebucht zusammenwirken.

In der Fig. 4 ist die Akkueinheit 100 nicht in der Aufnahmebucht 90 aufgenommen. Da allerdings keine Betätigungskraft auf die Druckfläche 13 wirkt, ist der Verriegelungsmechanismus 10 in der Lage befindlich, den er auch im Verriegelungszustand VZ (vgl. Fig. 1 und Fig. 2A) einnehmen würde. Dementsprechend definiert die Druckfläche 13 auch eine zweite schiefe Ebene E2, wobei der Hauptwinkel A im Gegensatz zu Fig. 3 weniger als 180° beträgt. Dementsprechend würde auch eine auf die Druckfläche 13 aufgebrachte Betätigungskraft FB einen Vektoranteil FA' bewirken (vgl. Fig. 2A), der entgegen der Auszugsrichtung AR orientiert ist.

### Bezugszeichenliste

- 10: Verriegelungsmechanismus
- 11: Entriegelungstaste
- 13: Druckfläche
- 15: Rasthaken
- 90: Aufnahmebucht
- 95: korrespondierende Rastausnehmung
- 100: Akkueinheit
- 120, 120: Akkuschiene
- 130: Druckfeder
- 200: Handwerkzeugmaschine
- 210: Handgriff
- 220: Geräteschiene
- 290: Werkzeugspindel

- AR: Auszugsrichtung des Akkus
- A: Hauptwinkel
- B, B': Nebenwinkel
- DA: Drehachse
- E1: erste schiefe Ebene
- E2: zweite schiefe Ebene
- FA: Vektoranteil der Betätigungskraft
- FB: Betätigungskraft
- FZ: Freigabezustand
- RA: Rotationsachse der Werkzeugspindel
- VZ: Verriegelungszustand
- ZG: zugewandte Seite

## Patentansprüche

1. Akkueinheit (100), die zur Aufnahme in einer Aufnahmebucht (90) einer elektrischen Handwerkzeugmaschine (200) ausgebildet ist, wobei die Akkueinheit (100) einen Verriegelungsmechanismus (10) aufweist, der in einem Verriegelungszustand (VZ) ein Herausziehen der Akkueinheit (100) aus der Aufnahmebucht (90) verhindert, wobei der Verriegelungsmechanismus (10) über eine Entriegelungstaste (11) mit einer Druckfläche (13) verfügt, durch Drücken und Auslenken welcher der Verriegelungsmechanismus (10) in einen Freigabezustand (FZ) verbracht werden kann, bei dem die Akkueinheit (100) aus der Aufnahmebucht (90) in Auszugsrichtung (AR) herausziehbar ist,
**dadurch gekennzeichnet, dass** die Druckfläche (13), im Freigabezustand (FZ) und bezogen auf die Auszugsrichtung (AR), eine erste schiefe Ebene (E1) derart definiert, dass ein Vektoranteil (FA) einer auf die Druckfläche (13) einwirkendenden Betätigungskraft (FB) in Auszugsrichtung (AR) orientiert ist.

2. Akkueinheit (100) nach Anspruch 1,
**dadurch gekennzeichnet, dass** die Druckfläche (13), im Verriegelungszustand (VZ) und bezogen auf die Auszugsrichtung (AR), eine zweite schiefe Ebene (E2) derart definiert, dass der Vektoranteil (FA') der auf die Druckfläche (13) einwirkendenden Betätigungskraft (FB) entgegen der Auszugsrichtung (AR) orientiert ist.

3. Akkueinheit (100) nach Anspruch 1 oder 2,
**dadurch gekennzeichnet, dass** der Verriegelungsmechanismus (10) um eine senkrecht zur Auszugsrichtung (AR) verlaufende Drehachse (DA) drehbar an der Akkueinheit (100) gelagert ist.

4. Akkueinheit (100) nach Anspruch 3,
**dadurch gekennzeichnet, dass** im Freigabezustand (FZ) ein Nebenwinkel (B), der zwischen erster schiefer Ebene (E1) und Auszugsrichtung (AR) eingeschlossen und um die Drehachse (DA) definiert ist, zwischen 5 Grad und 10 Grad beträgt.

5. Akkueinheit (100) nach einem der vorangehenden Ansprüche,
**dadurch gekennzeichnet, dass** der Verriegelungsmechanismus (10) einen Rasthaken (15) aufweist, der im Verriegelungszustand (VZ) mit einer an der Aufnahmebucht (90) ausgebildeten korrespondierenden Rastausnehmung (95) im Eingriff ist.

6. Akkueinheit (100) nach einem der vorangehenden Ansprüche,
**dadurch gekennzeichnet, dass** die Auszugsrichtung (AR) parallel zur Rotationsachse (RA) einer Werkzeugspindel (290) der Handwerkzeugmaschine (200) verläuft.

7. Akkueinheit (100) nach einem der vorangehenden Ansprüche,
**dadurch gekennzeichnet, dass** der Verriegelungsmechanismus (10) zusätzlich zu einer an der Akkueinheit (100) ausgebildeten Akkuschiene (120, 120') vorgesehen ist.

8. Akkueinheit (100) nach einem der vorangehenden Ansprüche,
**dadurch gekennzeichnet, dass** der Verriegelungsmechanismus (10) ausschließlich auf einer der Handwerkzeugmaschine (200) betriebsgemäß zugewandten Seite (ZG) der Akkueinheit (100) angeordnet ist.

9. Akkueinheit (100) nach einem der vorangehenden Ansprüche,
**dadurch gekennzeichnet, dass** die Betätigungskraft (FB) im Wesentlichen senkrecht zur Auszugsrichtung (AR) und parallel zu einem Handgriff (210) der Handwerkzeugmaschine (200) aufzubringen ist.

10. Elektrische Handwerkzeugmaschine (200) mit einer Akkueinheit (100) nach einem der vorangehenden Ansprüche.
